# EUROPÄISCHE PATENTSCHRIFT

(11) **EP 1 186 904 B1**
(45) Veröffentlichungstag und Bekanntmachung des Hinweises auf die Patenterteilung: **12.03.2008**
(21) Anmeldenummer: 01121817.9
(22) Anmeldetag: 11.09.2001
(51) Int. Cl.: G01S 5/14, A63B 29/02, G01S 5/00

(54) **Such- und Lokalisierungsverfahren für Personen**
Search and positioning method for persons
Procédé de recherche et de localisation de personnes

(30) Priorität: 11.09.2000 DE 10045817; 22.08.2001 DE 10140167
(43) Veröffentlichungstag der Anmeldung: 13.03.2002
(73) Patentinhaber: T-Mobile Deutschland GmbH, 53227 Bonn (DE)
(72) Erfinder: Schönfeld, Mark, 53721 Siegburg-Heide (DE)
(74) Vertreter: Riebling, Peter

(56) Entgegenhaltungen:
- WO-A-99/49331
- WO-A-99/57929
- DE-A- 19 755 075
- GB-A- 2 312 112
- US-A- 5 952 959

## Beschreibung

Die Erfindung betrifft ein Verfahren und eine Anordnung zur Suche und Lokalisieren von Personen in Notfallsituationen, z. B. im alpinen Rettungsbereich, oder zum Lokalisieren von vermissten Personen zu Überwachungszwecken wie z. B. von (Klein-) Kinder oder von verwirrte Personen.

Es sind speziell im alpinen Bereich Suchsysteme bekannt, bei welchen die zu schützende Person einen Signalgeber am Körper trägt und der im Gefahrenfall (abgehende Lawine) entweder manuell oder automatisch aktiviert wird und in Abhängigkeit von der Batteriekapazität für eine bestimmte Zeit ein Funksignal und / oder ein akustisches Signal abgibt.

Nachteilig an diesen Geräten ist, dass das akustische Signal aufgrund der Baugröße der Signalgeräte nur in einem begrenzten Radius gehört werden kann oder das Funksignal mit ebenfalls in begrenztem Radius wirkenden speziellen Funkpeilempfängern angepeilt werden kann. Weiterhin müssen bei der Funkortung mindestens zwei Funkpeilempfänger für die Ermittlung der Position der z. B. durch eine Lawine verschüttete Person verwendet werden. Zudem ist diese Peilmethode relativ ungenau, da es speziell im Hochgebirge durch Reflexionen des Funksignals an Felsenwänden zu Fehlmessungen kommen kann. Solche Fehlmessungen bedeuten jedoch einen erheblichen Zeitverlust bei dem Aufspüren der verschütteten Person, was u. U. ausschlaggebend für das Lebendbergen dieser Person ist. Senden zwei oder mehrere Signalgeber auf der gleichen Funkfrequenz, ist eine Funkortung nur sehr schwer möglich oder überhaupt nicht durchzuführen. Zudem kann das manuelle Auslösen des Signalgerätes bei einer überraschenden Gefahr nicht mehr durchgeführt werden oder die automatische Auslösung ist durch die verschiedenen zu berücksichtigenden Parametern für einen Gefahrenfall nicht zuverlässig.

In der US-A-5 952 959 ist ein Verfahren und System zur relativen Positionsbestimmung von zwei GPS-Geräten offenbart. Dabei werden die Positionswerte des ersten GPS-Gerätes bestimmt und per Funksignal an ein zweites GPS-Gerät gesendet. Das zweite GPS-Gerät bestimmt ebenfalls seine Positionswerte und errechnet aus diesen und den vom ersten GPS-Gerät empfangenen Positionswerten den relativen Abstand der beiden GPS-Geräte. Der Abstand und eine Richtungsinformation sind auf einem Display graphisch darstellbar. Es handelt sich hier um zwei aufeinander abgestimmte Geräte.

Die DE 197 55 075 A1 sowie WO 99/49331 A1 offenbaren mobile Alarm- und Notrufsysteme basierend auf GPS-Navigation und GSM-Mobilkommunikation, bei dem ein Notrufendgerät über Mobilfunk zur Übermittlung seines Standorts veranlasst werden kann.

Aufgabe der Erfindung ist es, ein Verfahren und eine Anordnung anzugeben, mit denen unabhängig von der Entfernung der vermissten Person zur ortenden Stelle eine genaue Lokalisierung dieser Person möglich ist. Insbesondere sollen das Verfahren und die Anordnung kostengünstig, sicher und zuverlässig sein.

Diese Aufgabe wird durch die Merkmale der unabhängigen Patentansprüche gelöst.

Vorteilhafte Weiterbildungen der Erfindung sind in den Unteransprüchen gekennzeichnet.

Die Vorteile der Erfindung sind, dass ohne Zutun der vermissten Person durch Abfrage der Ortsinformation der Suchvorgang jederzeit eingeleitet werden kann oder durch die kontinuierliche bzw. intervallmäßige Aussendung der Ortsinformationen jederzeit aufgenommen werden kann.

Die graphische Darstellung kann auf tragbare Laptops bzw. Palmtops in Verbindung mit GSM oder/und UMTS-Mobilfunkendgeräten (Handies) oder Smartphones (Kombination von Handy und Rechner mit graphischen Display) erfolgen. Die Suche kann somit vollkommen ortsunabhängig mit Geräten von nur geringem Gewicht und ohne jegliche Einschaltung einer ortsfesten Zentrale durchgeführt werden. Als Suchinformation können die Einblendung der Ortsposition in elektronisch erzeugte Karten oder Entfernungs- Richtungs-, Höhen- oder Tiefenangaben im Bezug auf die suchenden Personen dienen, so dass mit z. B. Kartenzoomfunktion hochgenau die Lage der zu suchenden Person dargestellt werden kann oder die Richtung und Entfernung zur suchenden Person am Display direkt graphisch angezeigt und abgelesen werden kann. Durch die Mobilfunkverbindung ist es nicht notwendig, dass die überwachende Einrichtung ortsnah zu der überwachenden Person sein muss, sondern es könnte auch eine zusätzliche Mobilfunkverbindung zu der Suchmannschaft vor Ort aufgebaut werden, über welche die notwendige Ortsinformation z. B. fernmündlich oder per Datentransfer von einer überwachenden Person / Mannschaft aus weitergegeben werden kann. Zudem sind die Anschaffungskosten der zu ortenden Geräten und der ortenden Geräte niedrig, da auf handelsübliche Geräte, die bestehende GPS-Ortungstechnik und flächendeckende GSM- bzw. zukünftig UMTS-Mobilfunknetze zurückgegriffen werden kann. Weiterhin können nahezu beliebig viele Personen von ebenso beliebig vielen Suchmannschaften überwacht werden ohne sich gegenseitig zu beeinflussen, da die Übertragung der Ortsinformationen über jeweils eine eigene Nachrichtenverbindung erfolgt. Gleichzeitig kann durch mehrmaliges Abfragen der Ortsinformation oder bei kontinuierlicher bzw. intervallartiger Abgabe der Ortsinformationen ein kontinuierliches Bewegungsabbild incl. der Bewegungsgeschwindigkeit der zu suchenden Person erstellt werden.

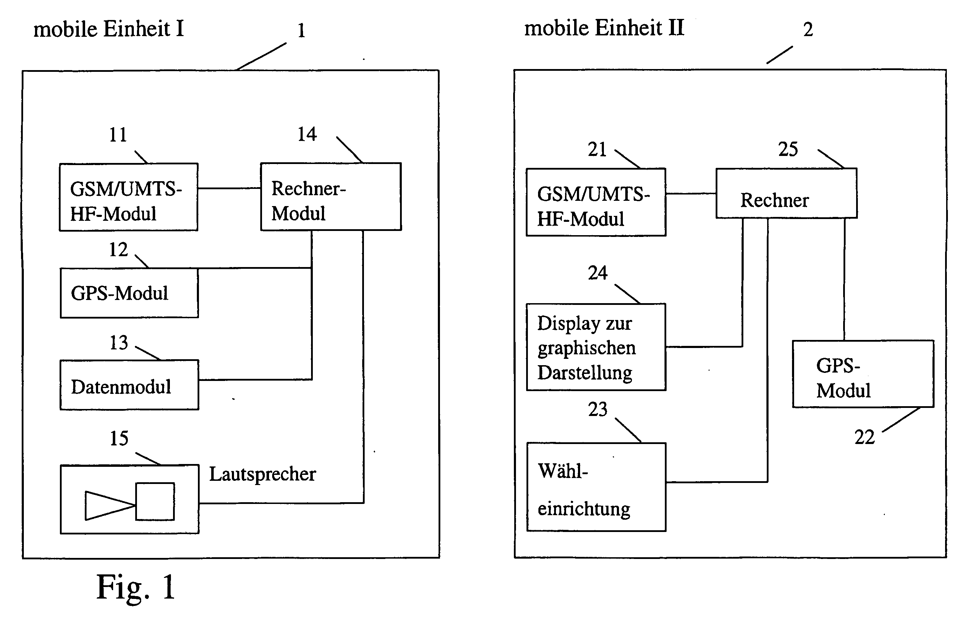

Die Fig. 1 zeigt den prinzipiellen Aufbau einer zu ortenden und einer ortenden mobilen Einheit.
Die Erfindung wird anhand eines Beispieles nachfolgend näher beschrieben.

Die ortenden mobile Einheit I besteht im wesentlichen aus einem GSM- oder/und UMTS-Modul, einem GPS-Modul mit zugehöriger (gemeinsamer) Antenne, einem Datenmodul, einem Lautsprecher und einem Rechner, der die Funktionen der einzelnen Module steuert und auch der Tonerzeugung für den Lautsprecher dient. Die ortende mobile Einheit II besteht im wesentlichen aus einem GSM- und/oder UMTS-Modul, einem GPS-Modul mit (gemeinsamer) Antenne, einer Wahleinrichtung, einem Display und ebenfalls aus einem Rechner, der die Funktionen der einzelnen Module dieser Einheit II steuert.

Die zu überwachende oder zu suchende Person trägt die mobile Einheit I (1) bei sich. Über ein Rechner-Modul (14) kann die Art des Überwachungsverfahrens gewählt werden. Je nach Gegebenheit kann die mobile Einheit I (1) auf Bereitschaft, auf kontinuierliche Aussendung der Ortsinformationen oder auf Aussendung der Ortsinformation in Intervallen eingestellt werden. Diese Ortsinformation wird aus den GPS-Signalen, die von einem GPS-Modul (12) empfangen und decodiert werden, bereitgestellt. In einem Datenmodul (13) können persönliche Daten, wie Risikofaktoren, Blutgruppe usw. des Trägers der Einheit I (1) und/oder Anwahlinformationen für die Verbindung zu einer oder mehrere überwachenden Einheiten II (2) abgespeichert sein.
Je nach Modus wählt das Rechner-Modul (14) in der mobilen Einheit I (1) mittels eines GSM/UMTS-HF-Moduls (11) eine Mobilfunkverbindung zur überwachenden mobile Einheit II (2) einmal an und hält diese Verbindung aufrecht, so dass ständig die Ortsinformationen mit ggf. den persönlichen Informationen an die mobile Einheit II (2) übertragen werden können, bzw. wählt in bestimmten Zeitabständen die mobile Einheit II (2) an und reicht dabei einmal nur die aktuellen Ortsinformationen ggf. mit den persönlichen Informationen weiter und bricht die Verbindung danach wieder ab. Im Modus "Bereitschaft" wird bei Anwahl der mobilen Einheit I (1) durch die mobile Einheit II (2) die Verbindung aufgebaut, die aktuellen Ortsdaten mit ggf. den Zusatzinformationen an die mobile Einheit II (2) abgesandt. Je nach Anforderung durch die mobile Einheit II (2) kann diese Verbindung abgebaut werden, die mobile Einheit I (1) wieder in den Bereitschaftmodus zurückkehren oder ab diesen Zeitpunkt mit der kontinuierlichen oder intervallmäßigen Aussendung der Ortsinformationen beginnen.

Die mobile Einheit II (2) als ortende Einheit nimmt je nach Modus entweder die Verbindung kontinuierlich oder intervallmäßig an und speichert / verarbeitet die Ortsdaten der mobilen Einheit I (1) in einem Rechner (25), so dass diese auf dem Display zur graphischen Darstellung (24) in einer elektronsich erzeugten Karte als Suchpunkt oder Bewegungsabbild eingeblendet werden können oder ruft im Bereitschaftsmodus der mobilen Einheit I (1) diese aktuellen Ortsdaten mittels einer Wähleinrichtung (23) und einem GSM/UMTS-HF-Modul (21) eventuell mit den zusätzlichen Daten ab um diese weiter zu verarbeiten. Bei Bedarf kann auch von der mobilen Einheit II (2) aus ein Lautsprecher (15) in der mobilen Einheit I (1) zur Abgabe eines Signaltons angeregt werden um entweder die Suche der vermissten Person zu erleichtern, die zu überwachende Person auf die Positionsabfrage aufmerksam zu machen oder als Sirenenton auf eine Notsituation aufmerksam zu machen. In diesem Fall kann der Sirenenton auch bei der mobilen Einheit I (1) manuell ausgelöst werden und gleichzeitig wie im kontinuierlichen Modus oder Intervallmodus die aktuelle Ortsinformation an die mobile Einheit II (29 weitergegeben werden. Hier könnte z. B. auch aus dem Datenmodul (13) der mobilen Einheit I (1) automatisch eine vorformulierte und dort abgespeicherte Notrufmeldung abgerufen und ausgesendet werden.

Da die mobile Einheit II (2) selbst ein GPS-Modul (22) besitzt, können auf dem Display zur geaphischen Darstellung (24) auch die Richtung, Entfernung, Höhe oder Tiefe der mobilen Einheit I (1) in Relation zur mobilen Einheit II (2) angezeigt werden.

### Liste der verwendeten Bezugszeichen:

- 1: mobile Einheit I
- 11: GSM/UMTS-HF-Modul
- 12: GPS-Modul
- 13: Datenmodul
- 14: Rechner-Modul
- 15: Lautsprecher
- 2: mobile Einheit II
- 21: GSM/UMTS-HF-Modul
- 22: GPS-Modul
- 23: Wähleinrichtung
- 24: Display zur graphischen Darstellung
- 25: Rechner

## Patentansprüche

1. Verfahren zur Suche und Lokalisieren von Personen,
wobei eine durch einen GPS-Empfänger in einer mobilen Einheit I bei der vermissten oder zu suchenden Person ermittelte Ortsinformation an eine zweite mobile Einheit II gesendet wird und diese Ortsinformationen in der mobilen Einheit II graphisch dargestellt werden,
**dadurch gekennzeichnet,**
**dass** die ermittelte Ortsinformation über ein Mobilfunknetz (GSM- oder UMTS-Netz) an die zweite mobile Einheit II (2) gesendet wird,
**dass** in einem Datenmodul (13) persönliche Daten des Trägers der Einheit I (1) und/oder Anwahlinformationen für die Verbindung zu einer oder mehreren überwachenden Einheiten II (2) abgespeichert sind,
**dass** die mobile Einheit II die in einem Bereitschaftsmodus befindliche mobile Einheit I über das Mobilfunknetz anwählt und die mobile Einheit I zur Abgabe der Ortsinformation veranlasst, wobei, je nach Anforderung durch die mobile Einheit II (2), entweder die Verbindung nach der Abgabe der Ortsinformation abgebaut wird und die mobile Einheit I (1) wieder in einen Bereitschaftsmodus zurückkehrt oder ab diesen Zeitpunkt mit einer kontinuierlichen oder intervallmäßigen Aussendung der Ortsinformationen begonnen wird.

2. Verfahren nach Anspruch 1, **dadurch gekennzeichnet, dass** die Ortsinformationen kontinuierlich über eine ständig bestehende Nachrichtenverbindung des Mobilfunknetzes die Ortsinformationen an die mobile Einheit II sendet.

3. Verfahren nach Anspruch 1, **dadurch gekennzeichnet, dass** die mobile Einheit I in bestimmten Intervallen eine Nachrichtenverbindung über das Mobilfunknetz aufbaut und jeweils eine Ortsinformation an die mobile Einheit II sendet.

4. Verfahren nach Anspruch 3, **dadurch gekennzeichnet, dass** bei der Anwahl der mobilen Einheit I von dieser ein akustisches Signal abgegeben wird.

5. Verfahren nach den Ansprüchen 1, 2 oder 3, **dadurch gekennzeichnet, dass** die Ortsinformation der mobilen Einheit I in der mobilen Einheit II graphisch auf einem Display dargestellt wird.

6. Verfahren nach Anspruch 5, **dadurch gekennzeichnet, dass** die Darstellung der Ortsinformation innerhalb einer elektronisch erzeugten Karte angezeigt wird.

7. Verfahren nach Anspruch 6, **dadurch gekennzeichnet, dass** die einzelnen Ortsinformationen als Bewegungsabbild dargestellt werden.

8. Verfahren nach Anspruch 6, **dadurch gekennzeichnet, dass** die Darstellung der Ortsinformation als Richtungs-, Entfernung- und Höhen- bzw. Tiefenangabe erfolgt.

9. Anordnung zur Durchführung des Verfahrens gemäß den Ansprüchen 1 bis 8 zur Suche und Lokalisieren von vermissten Personen, wobei eine mobile Einheit I (1) vorgesehen ist, die aus einem GPS-Modul (12), einem Datenmodul (13) und einem, die anderen Module verbindenden und steuernden Rechner-Modul (14) besteht, und eine mobile Einheit II (2) vorgesehen ist, die aus einem GPS-Modul (22), einem Display zur graphischen Darstellung (24) und einem, diese Module verbindenden und steuernden Rechner (25) besteht, **dadurch gekennzeichnet, dass** die mobilen Einheiten I (1) und II (2) jeweils ein GSM/UMTS-HF-Modul (11) und (21) enthalten,
dass das Datenmodul (13) der mobilen Einheit I (1) persönliche Daten des Trägers der mobilen Einheit I (1) und/oder Anwahldaten der mobilen Einheit II (2) enthält, und dass die mobile Einrichtung II (2) eine Wähleinrichtung (23) umfasst,
wobei die mobile Einheit I (1) für einen Betrieb in einem Bereitschaftsmodus eingerichtet ist und von der mobilen Einheit II über das Mobilfunknetz anwählbar und zur Abgabe der Ortsinformation veranlassbar ist, wobei die mobile Einheit I (1) eingerichtet ist, je nach Anforderung durch die mobile Einheit II (2), entweder die Verbindung nach der Abgabe der Ortsinformation abzubauen und wieder in einen Bereitschaftsmodus zurückzukehren oder ab diesen Zeitpunkt mit einer kontinuierlichen oder intervallmäßigen Aussendung der Ortsinformationen zu beginnen.

10. Anordnung nach Anspruch 9, **dadurch gekennzeichnet, dass** in der mobilen Einheit I als akustischer Signalgeber ein Lautsprecher (15) angeordnet ist.

11. Anordnung nach Anspruch 9, **dadurch gekennzeichnet, dass** das Datenmodul (13) eine vorbereitete, abgespeicherte Alarmmeldung enthält, die bei manueller Auslösung durch ein Betätigungsglied an der mobilen Einheit I (1) des Übertragungsvorganges der Ortsinformation von der mobilen Einheit I (1) zur mobilen Einheit II (2) diese Alarmmeldung mit überträgt.

12. Anordnung nach Anspruch 9, **dadurch gekennzeichnet, dass** die Wähleinrichtung (23) Wahlinformation für mindestens eine mobile Einheit I enthält.

## Claims

1. Method for searching for and locating people,
where a piece of location information ascertained by a GPS receiver in a mobile unit I on the missing person or the person to be sought is sent to a second mobile unit II and this location information is presented graphically in the mobile unit II,
**characterized**
**in that** the ascertained location information is sent via a mobile radio network (GSM or UMTS network) to the second mobile unit II (2),
**in that** a data module (13) stores personal data for the wearer of the unit I (1) and/or dial-up information for the connection to one or more monitoring units II (2),
**in that** the mobile unit II dials up the mobile unit I, which is in a standby mode, via the mobile radio network and prompts the mobile unit I to emit the location information, where, depending on the request by the mobile unit II (2), either the connection is cleared down and the mobile unit I (1) returns to a standby mode after the location information has been emitted or continuous or interval-based transmission of the location information is started from this time.

2. Method according to Claim 1, **characterized in that** the mobile unit I sends the location information to the mobile unit II continuously via a permanent communication link in the mobile radio network.

3. Method according to Claim 1, **characterized in that** the mobile unit I sets up a communication link via the mobile radio network at particular intervals and sends a respective piece of location information to the mobile unit II.

4. Method according to Claim 3, **characterized in that** dialling up the mobile unit I prompts it to emit an audible signal.

5. Method according to Claims 1, 2 and 3,
**characterized in that** the location information from the mobile unit I is presented graphically in the mobile unit II on a display.

6. Method according to Claim 5, **characterized in that** the presentation of the location information is displayed within an electronically produced map.

7. Method according to Claim 6, **characterized in that** the individual location information is presented as a depiction of movement.

8. Method according to Claim 6, **characterized in that** the location information is presented as a direction statement, a range statement and an altitude or depth statement.

9. Arrangement for carrying out the method according to Claims 1 to 8 for searching for and locating missing persons, where a mobile unit I (1) is provided which comprises a GPS module (12), a data module (13) and a computer module (14) which connects and controls the other modules, and a mobile unit II (2) is provided which comprises a GPS module (22), a display for graphical presentation (24) and a computer (25) which connects and controls these modules, **characterized in that** the mobile units I (1) and II (2) respectively contain a GSM/UMTS-HF module (11) and (21),
**in that** the data module (13) in the mobile unit I (1) contains personal data for the wearer of the mobile unit I (1) and/or dial-up data for the mobile unit II (2), and **in that** the mobile device II (2) comprises a dialling device (23),
where the mobile unit I (1) is set up for operation in a standby mode and can be dialled up by the mobile unit II via the mobile radio network and prompted to emit the location information, the mobile unit I (1) being set up, depending on the request by the mobile unit II (2), either to clear down the connection and return to a standby mode after the location information has been emitted or to start continuous or interval-based transmission of the location information from this time.

10. Arrangement according to Claim 9, **characterized in that** the mobile unit I contains a loudspeaker (15) as an audible signal generator.

11. Arrangement according to Claim 9, **characterized in that** the data module (13) contains a prepared, stored alarm message which, upon manual initiation of the transmission process for the location information from the mobile unit I (1) to the mobile unit II (2) by an operating element on the mobile unit I (1), transmits this alarm message at the same time.

12. Arrangement according to Claim 9, **characterized in that** the dialling device (23) contains dialling information for at least one mobile unit I.

## Revendications

1. Procédé pour la recherche et la localisation de personnes, dans lequel une information locale déterminée par un récepteur GPS dans une unité mobile I auprès de la personne disparue ou à rechercher est envoyé à une seconde unité mobile II et cette information locale est illustrée de façon graphique dans l'unité mobile II,
**caractérisé en ce que**
l'information locale déterminée est émise via un réseau de radiotéléphonie mobile (réseau GSM ou UMTS) à la seconde unité mobile II (2),
des données personnelles du porteur de l'unité I (1) et/ou des informations de composition de numéro pour la liaison à une ou plusieurs unités II (2) en surveillance sont mémorisées dans un module de données (13),
**en ce que** l'unité mobile II compose le numéro de l'unité mobile I qui se trouve en mode d'attente via le réseau de radiotéléphonie mobile et amène l'unité mobile I à fournir l'information locale,
dans lequel, selon l'interrogation par l'unité mobile II (2), soit la liaison est terminée après fourniture de l'information locale et l'unité mobile I (1) revient dans un mode d'attente, soit on démarre à partir de cet instant une émission continue ou à intervalles de l'information locale.

2. Procédé selon la revendication 1, **caractérisé en ce que** l'information locale est émise à l'unité mobile II en continu via une liaison de télécommunications permanente du réseau de radiotéléphonie mobile.

3. Procédé selon la revendication 1, **caractérisé en ce que** l'unité mobile I établit à intervalles déterminés une liaison de télécommunications via le réseau de radiotéléphonie mobile et émet à chaque fois une information locale à l'unité mobile II.

4. Procédé selon la revendication 3, **caractérisé en ce que** lors de la composition du numéro de l'unité mobile I, un signal acoustique est émis par celle-ci.

5. Procédé selon les revendications 1, 2 ou 3, **caractérisé en ce que** l'information locale de l'unité mobile I est illustrée de manière graphique sur un affichage dans l'unité mobile II.

6. Procédé selon la revendication 5, **caractérisé en ce que** l'illustration de l'information locale est présentée à l'intérieur d'une carte engendrée par voie électronique.

7. Procédé selon la revendication 6, **caractérisé en ce que** les informations locales individuelles sont illustrées sous forme d'une image en déplacement.

8. Procédé selon la revendication 6, **caractérisé en ce que** la représentation des informations locales a lieu par des indications de direction, d'éloignement, de hauteur et de profondeur.

9. Agencement pour la mise en oeuvre du procédé selon les revendications 1 à 8 pour la recherche et la localisation de personnes disparues, dans lequel est prévue une unité mobile I (1) qui est constituée par un module GPS (12), par un module de données (13) et par un module de calcul (14) qui relie et qui commande les autres modules, et il est prévu une unité mobile II (2) qui est constituée par un module GPS (22), par un affichage pour la représentation graphique (24) et par un calculateur (25) qui relie et qui commande ces modules, **caractérisé en ce que** :
les unités mobiles I (1) et II (2) contiennent chacune un module HF GSM/UMTS (11) et (21),
**en ce que** le module de données (13) de l'unité mobile I (1) contient des données personnelles du porteur de l'unité mobile I (1) et/ou des données de composition de l'unité mobile II (2), et **en ce que** l'unité mobile II (2) comprend des moyens de composition de numéro (23),
dans lequel l'unité mobile I (1) est conçue pour un fonctionnement dans un mode d'attente et pour être appelée par l'unité mobile II via le réseau de téléphonie mobile et être amenée à fournir l'information locale, ladite unité mobile I (1) étant conçue, selon l'interrogation par l'unité mobile II (2), soit pour terminer la liaison après la fourniture de l'information locale et revenir dans un mode d'attente, soit pour commencer à partir de cet instant une émission continue ou à intervalles de l'information locale.

10. Agencement selon la revendication 9, **caractérisé en ce qu'**un haut-parleur (15) est agencé dans l'unité mobile I à titre d'émetteur de signaux acoustiques.

11. Agencement selon la revendication 9, **caractérisé en ce que** le module de données (13) contient une annonce d'alarme préparée mémorisée qui, lors d'un déclenchement manuel, au moyen d'un organe d'actionnement sur l'unité mobile I (1), de l'opération de transmission de l'information locale de l'unité mobile I (1) à l'unité mobile II (2), transmet conjointement cette annonce d'alarme.

12. Agencement selon la revendication 9, **caractérisé en ce que** le dispositif de composition de numéro (23) contient des informations de composition pour au moins une unité mobile I.
